# EUROPEAN PATENT APPLICATION

(11) **EP 1 324 625 A1**
(43) Date of publication of application: **02.07.2003**
(21) Application number: 01403271.8
(22) Date of filing: 17.12.2001
(51) Int. Cl.: H04Q 7/22

(54) **Method and system for arranging a cell-reselection process**

(71) Applicant: ALCATEL, 75008 Paris (FR)
(72) Inventor: Brigant, Eric, 78140 Velizy-Villacoublay (FR); Landais, Bruno, 78220 Viroflay (FR)
(74) Representative: Lamoureux, Bernard

(57) **Abstract**

Method for arranging a cell reselection process between mobile station (14) and base station (12) in a digital cellular communications system, the mobile station (14) location is known by a base station system (11) at the cell level and the base station system (11) controls the cell reselection. The base station system (11) broadcasts a first averaging time parameter and a second averaging time parameter over a system information message associated to packet mode.

The mobile station (14) averages received signal level of the serving cell (15) and receiving signal level of the neighbour cells (16) over broadcast control channels as indicated by the first averaging time parameter and/or the second averaging time parameter, and sends independently of the packet mode, averaged measurements obtained over a dedicated signalling message.

## Description

### OBJECT OF THE INVENTION

The present invention relates to a method for sharing the necessary calculations for carrying out a cell re-selection in a General Packet Radio Service (GPRS) between both sides of a communication. That is, part of the cell reselection parameters is processed on the network side and another part thereof is processed on the remote unit side, namely, mobile station. When the mobile station involved has carried out its calculations it sends the result thereof to the network side.

Obviously, the old cell, serving cell, and the new cell, neighbour cell, supports GPRS, this means that the mobile station may perform packet access.

### STATE OF THE ART

By the document ETSI TS 101 349 V8.11.0 (2001-09) Digital cellular telecommunications system; General Packet Radio Service (GPRS); Mobile Station (MS) - Base Station System (BSS) Interface; Radio Link Control/Medium Access Control (RLC/MAC) protocol (3GPP TS 04.60 version 8.11.0 Release 1999), it is known that control over some processes such as cell selection and re-selection is exercised at the network side when a mobile station is in ready state.

In fact, the term "cell re-selection" is associated with GPRS and corresponds to the term "handover" associated with circuit switching GSM services.

There is some difference between a classical handover and a cell reselection. A handover allows reserving radio resources in the target cell whereas the cell reselection does not. When performing a cell reselection, the mobile station shall acquire certain system information sent in broadcast control channel from the network side (e.g. base station) before making any access in the target cell.

A cell reselection is therefore less efficient then an handover as there is a data transfer interruption during the cell reselection.

In standby state, the mobile station performs autonomous cell reselection, i.e. the mobile station is responsible of triggering its cell reselections (for instance when the radio received level falls below a given threshold) by computing a specified cell reselection algorithm.

In the ready state, the network instructs the mobile to send signal measurement reports to the base station. Then, the mobile terminals select the next cell re-selection based on the cell identity information received from the network. The mobile station can suspend its own cell re-selection calculations.

This is not compulsory. It is an option that the network may implement. If it is supported and activated by the operator, then the network controls the mobile station cell reselections.

When in idle state, and the network controlled cell reselection is activate, the mobile station only monitors the serving and surrounding cells and reports its measurements to the network. The mobile station does not perform any cell re-selection algorithms.

Therefore, each mobile terminal sends measurement reports to the network, according to information requests provided in the control message. These measurements are then processed by the base station, which may decide to perform a cell re-selection.

When ordered to send measurement reports, the mobile terminal monitors continuously all carriers and the broadcast control channel (BCCH carrier) of the serving cell.

For each carrier, the mobile station averages the received signal level measured during a reporting period. After each reporting period, the mobile terminal sends a measurement report to the base station. The reporting period is based on the radio-operating mode of the mobile terminal.

So, in packet idle mode there is a parameter (e.g. NC_REPORTING_PERIOD_I) for indicating the reporting period. That first parameter is rounded off to the nearest smaller integer multiple of the discontinuous reception period if the dedicated parameter is greater than the discontinuous reception period, otherwise the reporting period is the discontinuous reception period.

The discontinuous reception period is the time that separates two successive paging blocks while the mobile station is in discontinuous reception mode.

In packet transfer mode the mobile station listens its assigned radio resources. The reporting period is indicated in another parameter (e.g. NC_REPORTING_PERIOD_T). Furthermore, the mobile station takes at least one received signal level sample measurement on each control channel.

The network has to average the measurements reported by the mobile station during a certain period in the order of several seconds. This computation leads first to additional processing at the network side. Secondly, this may result in an inaccurate average at the network side in packet idle mode as explained in the next paragraph.

In the case where the discontinuous reception period is greater than the first parameter, namely, NC_REPORTING_PERIOD_I parameter, the mobile station may report the same sample measurements in consecutive measurement reports, resulting in an accurate average at the network side. As a consequence, the mobile station may perform cell reselection ordered by the network although it is not necessary.

### CHARACTERISATION OF THE INVENTION

To overcome the above mentioned drawbacks the present invention proposes a method for arranging a cell reselection process between mobile station and base station in a digital cellular communications system, where the mobile station location is known by a base station system at the cell level and the base station system controls the cell reselection.

The base station system broadcasts, via the base station, a first averaging time parameter and a second averaging time parameter over a system information message associated to packet mode. The first averaging time parameter and the second averaging time parameter are fixed by the base station system. They are variable between a minimum value and a maximum value.

The mobile station averages received signal level of the serving cell and receiving signal level of the neighbour cells over broadcast control channels as indicated by the first averaging time parameter and/or the second averaging time parameter, and sends independently of the packet mode, averaged measurements obtained over a dedicated signalling message.

In other word, the base station system informs the mobile station of the period of time it has to carry out said measurements. Thus, the network side performs a series of calculations and the mobile station performs other calculations in order that the network side transmits the information relative to the new service cell for the mobile terminal involved in the cell re-selection process. Also, the overall time employed for carrying out the call transfer is reduced.

Another advantage is that the same measurement averaging process could be used in Cell Change Notification or network controlled cell reselection mode. Presently, when the MS reports its measurements to the network, it provides averaged measurements which are different from that obtained in network controlled cell reselection mode.

### BRIEF DESCRIPTION OF THE DRAWINGS

A fuller explanation of the invention is given in the following description, based on the attached figures, in which:

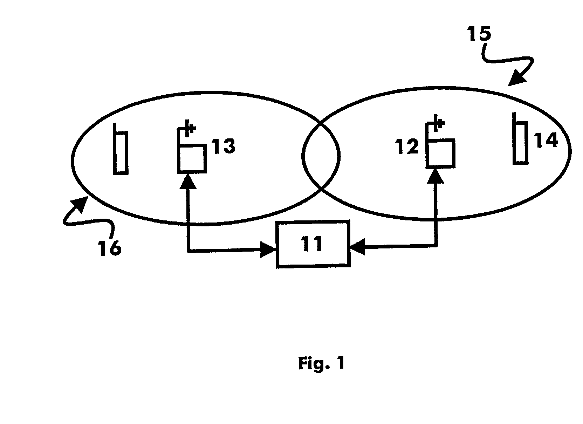

- figure 1 shows, in block diagram form, the coverage area of a base station of a radiocommunication system according to the invention.

### DESCRIPTION OF THE INVENTION

As shown in figure 1, a mobile terminal 14 moves into or near coverage areas 15, 16 that can be operating on the same set of radio network carrier frequencies, while sending and receiving their respective packet data traffic according to a standardised General Packet Radio Service GPRS that has been specified for use with a circuit switching system such as Global System for Mobile digital communication GSM.

Network can include one or more of a plurality of base stations 12, 13 for sending and receiving packet data traffic according to the standardised GPRS.

In an embodiment, the mobile station 14 is coupled via an air interface to the base station 12. Therefore, mobile terminal thereby functions to send and receive packet switched traffic. Mobile terminal 14 can represent one or more of a plurality of mobile terminals capable of handling packet data traffic.

The network includes base station (no shown) for sending and receiving circuit switched traffic, for instance GSM. Therefore, the mobile station 14 is capable of handling circuit switched traffic.

According to the present invention the mobile station 14 stays in the ready mode (GMM ready state). Therefore, a network entity as a base station system 11 controls the cell reselection process and the mobile station 14 sends measurement reports to the base station system 11. Note that in GMM ready state, a serving GPRS support node SGSN, namely, other network entity knows the mobile station 14 location at the cell level.

The mobile station 14 informs the base station system 11 when has detected the need for cell reselection. So, the base station system 11 may order the mobile station 14 to perform a cell reselection towards a different cell, new serving cell 16. For example, according to Cell Change Notification (CCN) procedure.

The mobile station 14 sends a request to the base station system 11 via the base station 12 to perform a cell-reselection. The request is sent to the base station system 11 over a signalling control channel as a Packet Cell Change Notification message.

After the request in order to start a cell reselection has been received at the base station system 11, it is sent a broadcast message that is received by the mobile station 14 located in the serving cell 15.

The broadcast message can be a system information message such as Network Control Information that includes a network control information element, such as a Network Control Order.

According to the invention, the mobile station 14 average its measurements with a window size given in the system information messages. In other word, the mobile station 14 averages its measurement during a period time predetermined by the base station system 11.

The mobile station 14 measures the received signal level of the serving cell 15 and the received signal level of the neighbour cells 16 over a broadcast control channels BCCH carriers. After, the mobile station 14 sends its measurement reports to the base station system 11 in packet mode.

According to other additional information provided in the control message, the Network Control message sent from the base station system 11 contains Reporting Period information parameters such as, a first dedicated parameter, for example, NC_AVERAGING_TIME_I in packet idle mode, and a second dedicated parameter, for example, NC_AVERAGING_TIME_T in packet transfer mode.

So, the mobile station 14 measures and calculates the average received level for each carrier over a period of time determined by first and second dedicated parameters.

The first dedicated parameter determines the time during which the received signal level samples are averaged by a mobile terminal in packet idle mode. And the second dedicated parameter determines the time during which the received signal level samples are averaged by a mobile terminal in packet transfer mode.

Therefore, the base station system 11 controls the duration of the averaging of the received signal level samples by broadcasting the first and second dedicated parameters.

According to the invention, the mobile station 14 sends its average measurement reports to the base station system 11 in accordance with other additional information provided in the control message. The average measurement reports are sent in dedicated signalling messages such as Packet Measurement Order or Packet Cell Change Order message in GPRS.

The mobile station 14 performs no cell re-selection evaluations on its own, but selects the next cell based on the cell identity information received from the base station system 11. The cell identity that the mobile station 14 is ordered to accept can be sent in a dedicated signalling message or packet transmission. So, the mobile station 14 selects then the new serving cell 16.

The base station system 11 maintains the radio network control as long as a Network Control information signal is broadcast with a particular value. A device in the network can reset the Network Control information. Then, the mobile station 14 resumes control and the mobile station 14 can continue normal cell re-selection protocol and use its own radio network control protocols.

## Claims

1. **Method for arranging a cell reselection process** between mobile station (14) and base station (12) in a digital cellular communications system, such as the mobile station (14) location is known by a base station system (11) at the cell level and the base station system (11) controls the cell reselection; **characterised in that** the method comprising the steps of,
- Broadcasting, from the base station (12), a first averaging time parameter and a second averaging time parameter over a system information message associated to packet mode,
- Averaging, at the mobile station (14), received signal level of the serving cell (15) and receiving signal level of the neighbour cells (16) over broadcast control channels as indicated by the first averaging time parameter and/or the second averaging time parameter,
- Sending independently of the packet mode, from the mobile station (14), averaged measurements obtained over a dedicated signalling message.

2. **System for arranging a cell reselection process** between mobile station (14) and base station (12) in a digital cellular communications system, such as the mobile station (14) location is known by a base station system (11) at the cell level and the base station system (11) controls the cell reselection; **characterised in that** the system includes
- Broadcasting means broadcasts a first averaging time parameter and a second averaging time parameter over a system information message associated to packet mode,
- Averaging means averages received signal level of the serving cell (15) and receiving signal level of the neighbour cells (16) over broadcast control channels as indicated by the first averaging time parameter and/or the second averaging time parameter,
- Sending means sends independently of the packet mode, from the mobile station (14), averaged measurements obtained over a dedicated signalling message.

3. **Base station** according to claim 2; **characterised in that** the base station (12) is adapted to broadcast to the mobile station (14), a first averaging time parameter and a second averaging time parameter over a system information message associated to packet mode.

4. **Base station** according to claim 3; **characterised in that** the base station (12) is adapted to receive from the mobile station (14), averaged measurements obtained over a dedicated signalling message.

5. **Base station** according to claim 4; **characterised in that** the base station (12) is adapted to communicate with the base station system (11).

6. **Base station system** according to claim 2; **characterised in that** the base station system (11) is adapted to send, via the base station (12), a first averaging time parameter and a second averaging time parameter over a system information message associated to packet mode.

7. **Base station system** according to claim 6; **characterised in that** the base station system (11) is adapted to receive, via the base station (12), averaged measurements obtained over a dedicated signalling message.

8. **Mobile station** according to claim 2; **characterised in that** the mobile station (14) is adapted to receive the a first averaging time parameter and a second averaging time parameter over a system information message associated to packet mode.

9. **Mobile station** according to claim 8; **characterised in that** the mobile station (14) is adapted to average received signal level of the serving cell (15) and receiving signal level of the neighbour cells (16) over broadcast control channels as indicated by the first averaging time parameter and/or the second averaging time parameter.

10. **Mobile station** according to claim 9; **characterised in that** the mobile station (14) is adapted to send independently of the packet mode averaged measurements obtained over a dedicated signalling message.
